# FASCICULE DE BREVET EUROPEEN

(11) **EP 2 538 646 B1**
(45) Date de publication et mention de la délivrance du brevet: **23.02.2022**
(21) Numéro de dépôt: 12172966.9
(22) Date de dépôt: 21.06.2012
(51) Int. Cl.: H04M 3/56, H04M 3/42

(54) **Serveur d'application apte à contrôler une conférence téléphonique**
Anwendungsserver um eine Telefonkonferenz zu steuern
Application server for controlling a telephone conference

(30) Priorité: 22.06.2011 FR 1155499
(43) Date de publication de la demande: 26.12.2012
(73) Titulaire: ORANGE, 92130 Issy-les-Moulineaux (FR)
(72) Inventeur: Meurisse, Jean-Sébastien, 22700 Louannec (FR); Saino, Lorenzo, London, Greater London W4 4AH (GB)
(74) Mandataire: Cabinet Beau de Loménie

(56) Documents cités:
- EP-A2- 1 098 504
- EP-A2- 1 866 792
- WO-A2-2004/073288
- US-A1- 2007 274 492

## Description

La présente invention se situe dans le domaine de la planification et de la gestion de conférences téléphoniques entre des terminaux dans un réseau de communication.

Par conférence téléphonique, on entend ici tout type de communication téléphonique entre des terminaux, dans lesquels les terminaux se connectent à un point central, appelé pont d'une conférence, pour communiquer entre eux.

De façon connue, l'organisation de telles conférences téléphoniques nécessite d'envoyer, de façon préalable, les informations sur la conférence aux participants, notamment le numéro de téléphone du pont de conférence et éventuellement un mot de passe permettant à l'utilisateur de rejoindre la conférence.

Ce mode de fonctionnement est peu ergonomique notamment en situation de mobilité, car il oblige l'utilisateur à rechercher le numéro de téléphone de la conférence pour la rejoindre.

Par ailleurs, lorsque la conférence est prévue pour débattre d'un sujet confidentiel, l'envoi des informations peut ne pas être souhaité, surtout s'il existe un risque que ces informations soient retransmises de façon mal attentionnée ou accidentelle à un tiers non convié à la conférence.

Par ailleurs, il est fréquent que plus de deux personnes participent à une conférence téléphonique pour traiter de sujets variés. En pratique, il n'est pas simple, dans l'état actuel de la technique d'inviter les différents participants à rejoindre la conférence téléphonique au moment idéal pour qu'ils puissent traiter uniquement les sujets qui les concernent. Les utilisateurs rejoignent donc le plus souvent la conférence téléphonique trop tôt, ce qui perturbe les sujets en cours de discussion, ou trop tard, ce qui fait perdre du temps aux autres participants.

Le document US 2007/274492 décrit un système de conférence apte à notifier des terminaux de la survenue d'événements de la conférence.

Le document EP 1 098 504 décrit un système de gestion de conférence dans lequel des terminaux préenregistrés reçoivent un message de notification.

Le document WO 2004/073288 décrit un système de conférence dans lesquels les terminaux reçoivent un message de notification comportant l'identifiant d'un pont de conférence.

L'invention vise un système de planification d'une conférence téléphonique qui ne présente pas ces inconvénients.

### Objet et résumé de l'invention

Plus précisément, et selon un premier aspect, l'invention concerne un serveur d'application selon la revendication 1.

Corrélativement, l'invention vise un procédé de planification d'une conférence téléphonique selon la revendication 8.

Selon un troisième aspect, l'invention vise également un système de gestion d'une conférence téléphonique selon la revendication 5.

L'invention vise aussi un programme d'ordinateur selon la revendication 9.

L'invention vise aussi un support d'informations lisible par un ordinateur selon la revendication 10.

### Brève description des dessins

D'autres caractéristiques et avantages de la présente invention ressortiront de la description faite ci-dessous en référence aux dessins qui en illustrent un exemple de réalisation dépourvu de tout caractère limitatif. Sur les figures :
- la figure 1 représente un système de gestion de conférence téléphonique conforme à un premier mode de réalisation de l'invention ;
- la figure 2 représente, sous forme d'organigramme les principales étapes d'un procédé de planification de conférence téléphonique conforme à l'invention ;
- la figure 3 représente, sous forme d'organigramme, les principales étapes d'un procédé mis en oeuvre par un terminal conforme à l'invention ; et
- la figure 4 représente un système de gestion d'une conférence téléphonique conforme à un deuxième mode de réalisation de l'invention.

### Description détaillée de l'invention

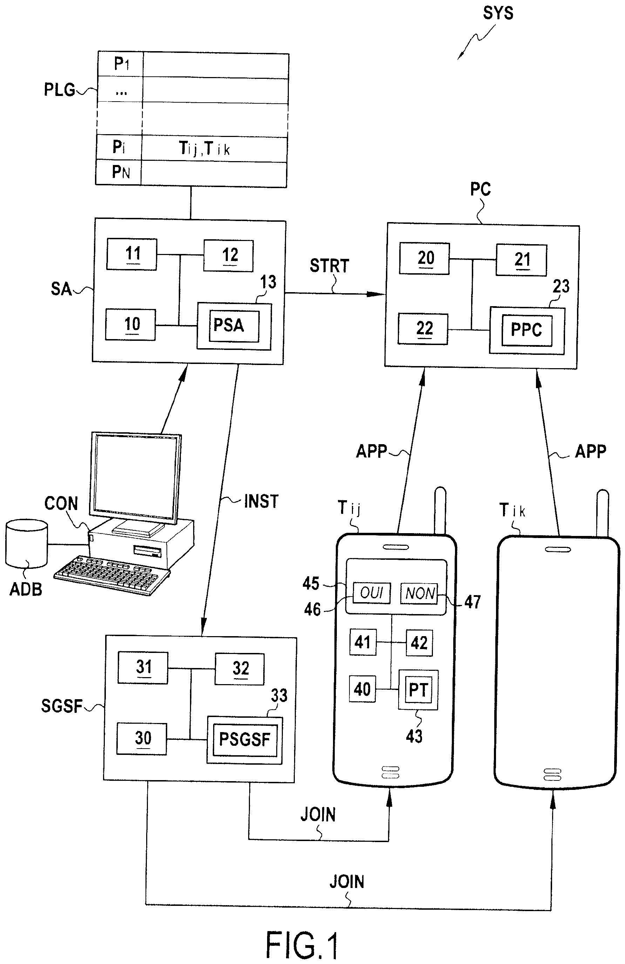

La **figure 1** représente un système SYS de gestion d'une conférence téléphonique entre des terminaux, ce système étant conforme à un mode particulier de réalisation de l'invention.

Il comporte un serveur d'application SA conforme à l'invention apte à établir une conférence téléphonique entre des terminaux Tᵢⱼ, Tᵢₖ conformes à l'invention.

Dans l'exemple de réalisation décrit ici, nous supposerons que l'organisateur de la conférence planifie les différentes phases Pᵢ de la conférence au moyen d'une console CON.

Dans l'exemple de réalisation décrit ici, cette console CON est constituée par un ordinateur portable apte à se connecter, via une interface Web au serveur d'application SA.

Dans l'exemple de réalisation décrit ici, cette console CON accède à un carnet d'adresses ADB comportant les identifiants des terminaux des utilisateurs susceptibles de participer à la conférence, et notamment ceux des terminaux Tᵢⱼ, Tᵢₖ.

Dans l'exemple de réalisation décrit ici, le serveur d'application SA a l'architecture matérielle d'un ordinateur. Il comporte un processeur 10, des moyens de communication 11, une mémoire vive de type RAM 12 et une mémoire morte de type ROM 13 comportant un programme d'ordinateur PSA pouvant être exécuté par le processeur 10.

Dans l'exemple de réalisation décrit ici, le serveur d'application SA accède à une structure de données PLG dans laquelle sont mémorisées les différentes phases de la conférence et pour chacune des phases, les terminaux devant rejoindre la conférence au début de cette phase. On suppose que dans cet exemple que la conférence comporte N phases, les terminaux Tᵢⱼ et Tᵢₖ devant rejoindre la conférence au cours d'une phase Pᵢ.

Le système SYS selon l'invention comporte un pont de conférence PC apte à connecter les terminaux T_{ij'} Tᵢₖ à la conférence sur réception d'un appel téléphonique de ces terminaux.

Dans l'exemple de réalisation décrit ici le pont de conférence PC a l'architecture matérielle d'un ordinateur. Il comporte un processeur 20, des moyens de communication 21, une mémoire vive de type RAM 22 et une mémoire morte de type ROM 23 comportant les instructions d'un programme d'ordinateur PPC pouvant être exécutées par le processeur 20.

Le serveur d'application SA est apte à envoyer un ordre STRT au pont d'une conférence PC pour déclencher l'ouverture de la conférence téléphonique.

Sur réception de ce message, le pont de conférence PC se place dans l'attente d'appels téléphoniques en provenance des différents terminaux souhaitant rejoindre la conférence.

Le serveur d'application SA invite ensuite les différents terminaux à joindre la conférence, selon les différentes phases Pᵢ définies et mémorisées dans la structure de données PLG par l'utilisateur de la console CON et mémorisées dans la structure de données PLG.

Juste avant le démarrage d'une phase Pᵢ, le serveur d'application SA envoie, dans le mode de réalisation décrit ici, une instruction INST à un serveur de gestion sans fil SGSF pour que celui-ci envoie une commande JOIN à chacun des terminaux Tᵢⱼ, Tᵢₖ devant rejoindre la conférence téléphonique au début de la phase Pᵢ.

Conformément à l'invention, la commande JOIN comporte l'identifiant du pont de conférence PC.

Dans l'exemple de réalisation décrit ici, le serveur de gestion sans fil SGSF a l'architecture matérielle d'un ordinateur. Il comporte un processeur 30, des moyens de communication 31, une mémoire vive de type RAM 32 et une mémoire morte de type ROM 33 comportant les instructions d'un programme d'ordinateur PSGSF exécutable par le processeur 30.

Dans l'exemple de réalisation décrit ici, chacun des terminaux Tᵢⱼ a l'architecture matérielle d'un ordinateur. Ils comportent un processeur 40, des moyens de communication 41, une mémoire vive de type RAM 42 et une carte à microcircuit 43 apte à exécuter un programme d'ordinateur PT et un écran 45.

Plus précisément, la carte à microcircuit 43 mémorise, dans ce mode de réalisation, un exécutable (applet) apte à émettre des commandes vers le terminal Tᵢⱼ dans lequel elle est insérée, ces commandes étant en fonction de la technologie de communication sans fil utilisée. Par exemple, dans le cas d'un réseau mobile conforme au 3GPP (3^{rd} Generation Partnership Project), cette applet peut être du type USAT (USIM Application Toolkit) ou du type SIM Application Toolkit (STK). Cette carte à microcircuit peut comporter différentes applications, et en particulier des applications d'authentification.

Bien évidemment, les moyens 31 de communication du serveur de gestion sans fil SGSF et 41 des terminaux Tᵢⱼ, Tᵢₖ doivent être compatibles. Par exemple, si le serveur de gestion sans fil SGSF communique avec les terminaux par l'envoi de SMS, ce serveur SGSF doit s'interfacer avec un SMSC (SMS Center). De plus, si les messages doivent être encryptés, le serveur de gestion sans fil SGSF doit connaître des clefs de cryptage correspondant à chacune des cartes à microcircuit 43 incorporées dans les terminaux mobiles pour encrypter correctement les messages destinés à ces terminaux.

Dans le mode de réalisation décrit ici, la commande JOIN est envoyée par le serveur de gestion sans fil SGSF, aux différents terminaux mobiles Tᵢⱼ, Tᵢₖ sous la forme d'un EMS chiffré de classe 2.

Lorsqu'un terminal Tᵢⱼ reçoit une commande JOIN en provenance du serveur de gestion sans fil SGSF, il détermine que ce message est destiné à la carte à microcircuit 43 et transmet le message à la carte.

Conformément à ce mode de réalisation, la carte à microcircuit est apte à interpréter et à exécuter la commande JOIN, l'exécution de cette commande générant un appel téléphonique APP vers le pont de conférence PC.

Dans le mode de réalisation décrit ici, l'exécution de la commande entraîne, avant l'appel, l'affichage d'une boîte de dialogue sur l'écran 45 du terminal, pour permettre à l'utilisateur d'autoriser ou d'empêcher l'appel APP vers le pont de conférence PC, en un seul clic, en appuyant sur un bouton virtuel 46 (appel autorisé), 47 (appel refusé).

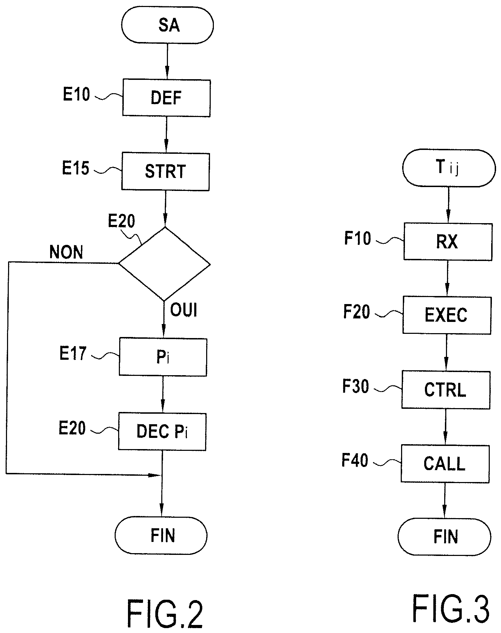

La **figure 2** représente, selon l'organigramme, les principales étapes d'un procédé de planification conforme à l'invention, ce procédé étant mis en œuvre par le serveur d'application SA décrit en référence à la figure 1.

Ce procédé comporte une étape E10 permettant la définition d'au moins une phase de la conférence et de la liste des terminaux participant à chacune de ces phases. Cette étape peut comporter l'enregistrement des phases et des terminaux associés dans la structure de données PLG.

Au cours d'une étape E15, le serveur d'application SA envoie, dans cet exemple, un ordre STRT au pont de conférence PC pour déclencher l'ouverture de la conférence téléphonique.

Puis, le procédé de planification comporte une boucle mise en œuvre pour chacune des phases Pi mémorisée dans la structure de données PLG. Cette boucle comporte une première étape E17 consistant à attendre le début de la phase Pi, ou plus précisément, un instant antérieur, par exemple de quelques minutes au début de cette phase.

Puis, au cours d'une étape E20, le serveur d'application SA déclenche l'envoi, par le serveur de gestion sans fil SGSF, d'un SMS chiffré comportant la commande JOIN aux terminaux devant rejoindre la conférence téléphonique au début de la phase Pi. Comme mentionné précédemment, l'interprétation et l'exécution de cette commande JOIN par les terminaux génère un appel téléphonique de ces terminaux vers le pont de conférence PC, ce dernier étant apte à connecter le terminal à la conférence sur réception de cet appel.

La **figure 3** décrit les principales étapes du procédé mis en oeuvre par un terminal Tᵢⱼ dans ce mode de réalisation.

Au cours d'une étape F10, le terminal reçoit une commande JOIN en provenance du système de gestion de conférence conforme à l'invention, cette commande étant aiguillée, par le terminal, à la carte à microcircuit 43.

La carte à microcircuit 43 interprète et exécute, au cours d'une étape F20 la commande JOIN, ce qui déclenche l'appel (étape F40) du pont d'une conférence PC par le terminal Tᵢⱼ, l'identifiant du pont d'une conférence étant compris dans la commande JOIN.

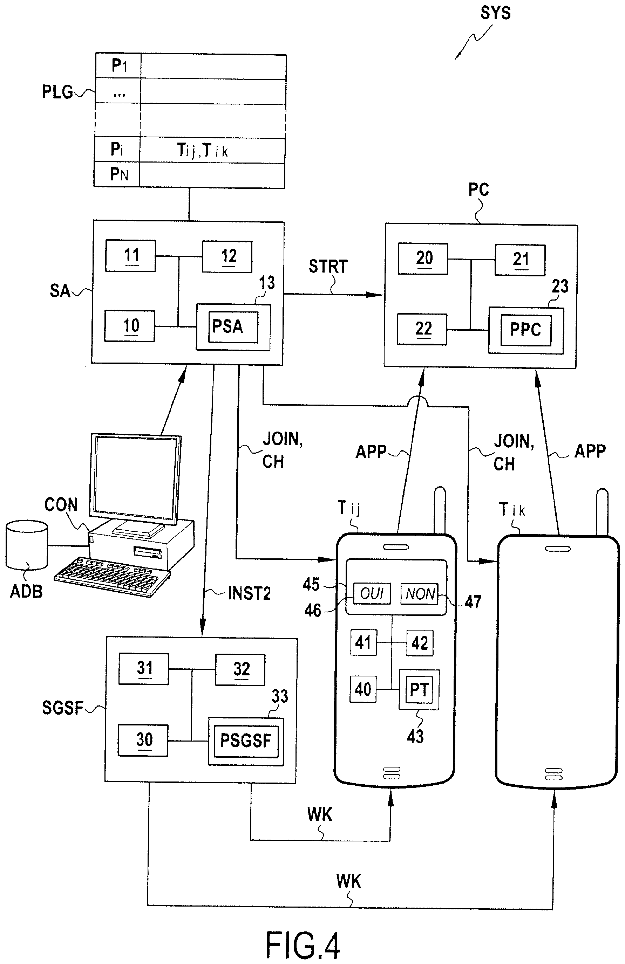

La **figure 4** représente un système de gestion de conférence conforme à un autre mode de réalisation de l'invention.

Dans ce mode de réalisation, le système SYS ne comporte pas nécessairement de serveur de gestion sans fil, le serveur d'application SA étant apte à établir un canal de communication CH avec chacun des terminaux Tᵢⱼ, Tᵢₖ pour leur envoyer la commande JOIN comportant l'identifiant du pont de conférence PC.

Dans ce mode de réalisation, il peut néanmoins être avantageux que le serveur SA déclenche, par une instruction INST2, l'envoi, par un serveur de gestion sans fil SGSF, d'un message SMS préalable WK à chacun des terminaux Tᵢⱼ, pour placer ces terminaux en attente de la commande.

Quel que soit le mode de réalisation de l'invention, lorsqu'un mot de passe est nécessaire, celui-ci peut être envoyé automatiquement par le terminal Tᵢⱼ, Tᵢₖ au pont de conférence PC, par exemple via l'envoi d'une séquence de codes DTMF.

L'invention permet facilement, aux utilisateurs des terminaux Tᵢⱼ, Tᵢₖ d'accéder à une conférence en un seul clic, la numérotation du numéro du pont de conférence se faisant automatiquement, sans saisie d'un mot de passe.

Très avantageusement, chacun des utilisateurs de terminaux mobiles Tᵢⱼ est invité à la conférence au début de la phase qui le concerne.

## Revendications

1. Serveur d'application (SA) comportant :
- des moyens (10) pour définir une pluralité de phases (Pi) d'une conférence téléphonique et la liste des terminaux (Tij, Tik) devant rejoindre ladite conférence au début de chacune desdites phases (Pi) ; et
- des moyens (11) de séquencement aptes à déclencher, préalablement au démarrage de chacune desdites phases (Pi), l'envoi d'une commande (JOIN) à chacun des terminaux (Tij) devant rejoindre la conférence téléphonique au début de ladite phase (Pi), l'exécution de ladite commande (JOIN) par une carte microcircuit (43) comprise dans le terminal (Tij), générant un appel téléphonique (APP) dudit terminal (Tij) vers un pont de conférence (PC) apte à connecter ledit terminal (Tij) à ladite conférence sur réception d'un appel téléphonique (APP) en provenance dudit terminal (Tij), la carte à microcircuit (43) mémorisant un exécutable apte à émettre des commandes vers le terminal dans lequel elle est insérée.

2. Serveur d'application (SA) selon la revendication 1, **caractérisé en ce qu'**il comporte des moyens (11) aptes à établir un canal (CH) de communication de données avec ledit terminal (Tij) et à lui envoyer ladite commande (JOIN) dans ledit canal (CH).

3. Serveur d'application (SA) selon la revendication 2 **caractérisé en ce qu'**il comporte des moyens (11) pour déclencher l'envoi d'un message de type SMS (WK) audit terminal (Tij) pour l'activer avant d'établir ledit canal de communication de données (CH).

4. Serveur d'application (SA) selon l'une quelconque des revendications 1 à 3 **caractérisé en ce que** lesdits moyens de séquencement sont aptes à déclencher un nouvel envoi de ladite commande à un dit terminal (Tij).

5. Système (SYS) de gestion d'une conférence téléphonique entre des terminaux, ledit système comportant :
- un serveur d'application (SA) selon l'une quelconque des revendications 1 à 4 ; et
- un pont de conférence (PC) apte à connecter un terminal (Tij) à ladite conférence sur réception d'un appel téléphonique (APP) en provenance dudit terminal (Tij).

6. Système de gestion selon la revendication 5 **caractérisé en ce qu'**il comporte un serveur de gestion sans fil (SGSF) apte à envoyer ladite commande (JOIN) audit terminal sous forme d'un message de type SMS sur instruction dudit serveur d'application (SA).

7. Système de gestion selon la revendication 5 ou 6 **caractérisé en ce qu'**il comporte des moyens (11, PC) pour envoyer un message complémentaire à au moins un dit terminal (Tij).

8. Procédé de planification d'une conférence téléphonique entre des terminaux (Tij, Tik), ce procédé comportant :
- une étape (E10) de définition d'une pluralité de phases (Pi) de ladite conférence et de la liste des terminaux (Tij, Tik) devant rejoindre la conférence au début de chacune desdites phases (Pi) ; et
- pour chacune des phases une étape (E20) de déclenchement, préalablement au démarrage de cette phase (Pi), de l'envoi d'une commande (JOIN) à chacun des terminaux (Tij) devant rejoindre la conférence téléphonique au début de ladite phase (Pi), l'exécution de ladite commande (JOIN) par une carte à microcircuit (43) comprise dans ledit terminal (Tij), générant un appel téléphonique (APP) dudit terminal (Tij) vers un pont de conférence (PC) apte à connecter ledit terminal (Tij) à ladite conférence sur réception de l'appel téléphonique (APP) en provenance dudit terminal (Tij), la carte à microcircuit (43) mémorisant un exécutable apte à émettre des commandes vers le terminal dans lequel elle est insérée.

9. Programme d'ordinateur (PSA) comportant des instructions pour l'exécution des étapes du procédé de planification selon la revendication 8 lorsque ledit programme est exécuté par un ordinateur.

10. Support d'enregistrement (13) lisible par un ordinateur sur lequel est enregistré un programme d'ordinateur (PSA) comprenant des instructions pour l'exécution des étapes du procédé de planification selon la revendication 8.

## Patentansprüche

1. Anwendungsserver (SA), umfassend:
- Einrichtungen (10), um eine Mehrzahl von Phasen (Pi) einer Telefonkonferenz und die Liste der Endgeräte (Tij, Tik), die der Konferenz zu Beginn jeder der Phasen (Pi) beitreten sollen, zu definieren; und
- Sequenzierungseinrichtungen (11), die geeignet sind, vor dem Starten jeder der Phasen (Pi) das Senden eines Kommandos (JOIN) an jedes der Endgeräte (Tij), die der Telefonkonferenz zu Beginn der Phase (Pi) beitreten sollen, zu senden, wobei die Ausführung des Kommandos (JOIN) durch eine in dem Endgerät (Tij) enthaltene Chipkarte (43) einen Telefonanruf (APP) des Endgeräts (Tij) zu einer Konferenzbrücke (PC) erzeugt, die geeignet ist, das Endgerät (Tij) beim Empfangen eines von dem Endgerät (Tij) kommenden Telefonanrufs (APP) mit der Konferenz zu verbinden, wobei die Chipkarte (43) eine Programmdatei speichert, die geeignet ist, Kommandos zu dem Endgerät, in das sie eingesetzt ist, auszusenden.

2. Anwendungsserver (SA) nach Anspruch 1, **dadurch gekennzeichnet, dass** er Einrichtungen (11) umfasst, die geeignet sind, einen Datenübertragungskanal (CH) zu dem Endgerät (Tij) aufzubauen und ihm das Kommando (JOIN) in dem Kanal (CH) zu senden.

3. Anwendungsserver (SA) nach Anspruch 2, **dadurch gekennzeichnet, dass** er Einrichtungen (11) umfasst, um das Senden einer Nachricht vom Typ SMS (WK) an das Endgerät (Tij) auszulösen, um es zu aktivieren, bevor der Datenübertragungskanal (CH) aufgebaut wird.

4. Anwendungsserver (SA) nach einem der Ansprüche 1 bis 3, **dadurch gekennzeichnet, dass** die Sequenzierungseinrichtungen geeignet sind, ein erneutes Senden des Kommandos an ein Endgerät (Tij) auszulösen.

5. System (SYS) zur Verwaltung einer Telefonkonferenz zwischen Endgeräten, wobei das System umfasst:
- einen Anwendungsserver (SA) nach einem der Ansprüche 1 bis 4; und
- eine Konferenzbrücke (PC), die geeignet ist, ein Endgerät (Tij) beim Empfangen eines von dem Endgerät (Tij) kommenden Telefonanrufs (APP) mit der Konferenz zu verbinden.

6. Verwaltungssystem nach Anspruch 5, **dadurch gekennzeichnet, dass** es einen drahtlosen Verwaltungsserver (SGSF) umfasst, der geeignet ist, das Kommando (JOIN) auf Anweisung des Anwendungsservers (SA) in Form einer Nachricht vom Typ SMS an das Endgerät zu senden.

7. Verwaltungssystem nach Anspruch 5 oder 6, **dadurch gekennzeichnet, dass** er Einrichtungen (11, PC) umfasst, um eine ergänzende Nachricht an mindestens ein Endgerät (Tij) zu senden.

8. Verfahren zur Planung einer Telefonkonferenz zwischen Endgeräten (Tij, Tik), wobei dieses Verfahren umfasst:
- einen Schritt (E10) des Definierens einer Mehrzahl von Phasen (Pi) der Konferenz und der Liste der Endgeräte (Tij, Tik), die der Konferenz zu Beginn jeder der Phasen (Pi) beitreten sollen; und
- für jede der Phasen einen Schritt (E20) des Auslösens, vor dem Starten dieser Phase (Pi), des Sendens eines Kommandos (JOIN) an jedes der Endgeräte (Tij), die der Telefonkonferenz zu Beginn der Phase (Pi) beitreten sollen, wobei die Ausführung des Kommandos (JOIN) durch eine in dem Endgerät (Tij) enthaltene Chipkarte (43) einen Telefonanruf (APP) des Endgeräts (Tij) zu einer Konferenzbrücke (PC) erzeugt, die geeignet ist, das Endgerät (Tij) beim Empfangen des von dem Endgerät (Tij) kommenden Telefonanrufs (APP) mit der Konferenz zu verbinden, wobei die Chipkarte (43) eine Programmdatei speichert, die geeignet ist, Kommandos zu dem Endgerät, in das sie eingesetzt ist, auszusenden.

9. Computerprogramm (PSA), das Anweisungen zur Ausführung der Schritte des Planungsverfahrens nach Anspruch 8 bei der Ausführung des Programms durch einen Computer umfasst.

10. Computerlesbares Speichermedium (13), auf dem ein Computerprogramm (PSA) gespeichert ist, das Anweisungen zur Ausführung der Schritte des Planungsverfahrens nach Anspruch 8 umfasst.

## Claims

1. Application server (SA) including:
- means (10) for defining a plurality of phases (Pi) of a conference call and the list of the terminals (Tij, Tik) that are to join said conference call at the start of each of said phases (Pi); and
- sequencing means (11), which are able to trigger, prior to the starting of each of said phases (Pi), the sending of a command (JOIN) to each of the terminals (Tij) that are to join the conference call at the start of said phase (Pi), the execution of said command (JOIN) by a microcircuit card (43) included in the terminal (Tij) generating a telephone call (APP) from said terminal (Tij) to a conference bridge (PC) that is able to connect said terminal (Tij) to said conference call on reception of a telephone call (APP) from said terminal (Tij), the microcircuit card (43) storing an executable that is able to transmit commands to the terminal in which it is inserted.

2. Application server (SA) according to Claim 1, **characterized in that** it includes means (11) that are able to establish a data communication channel (CH) for communication with said terminal (Tij) and to send said command (JOIN) to said terminal over said channel (CH).

3. Application server (SA) according to Claim 2, **characterized in that** it includes means (11) for triggering the sending of an SMS message (WK) to said terminal (Tij) in order to activate it before establishing said data communication channel (CH).

4. Application server (SA) according to any one of Claims 1 to 3, **characterized in that** said sequencing means are able to trigger renewed sending of said command to one said terminal (Tij).

5. System (SYS) for managing a conference call between terminals, said system including:
- an application server (SA) according to any one of Claims 1 to 4; and
- a conference bridge (PC), which is able to connect a terminal (Tij) to said conference call on reception of a telephone call (APP) from said terminal (Tij).

6. Management system according to Claim 5, **characterized in that** it includes a wireless management server (SGSF), which is able to send said command (JOIN) to said terminal in the form of an SMS message on the instruction of said application server (SA).

7. Management system according to Claim 5 or 6, **characterized in that** it includes means (11, PC) for sending a supplementary message to at least one said terminal (Tij).

8. Method for scheduling a conference call between terminals (Tij, Tik), said method including:
- a step (E10) of defining a plurality of phases (Pi) of said conference call and the list of the terminals (Tij, Tik) that are to join the conference call at the start of each of said phases (Pi); and
- for each of the phases, a step (E20) of triggering, prior to the starting of said phase (Pi), the sending of a command (JOIN) to each of the terminals (Tij) that are to join the conference call at the start of said phase (Pi), the execution of said command (JOIN) by a microcircuit card (43) included in the terminal (Tij) generating a telephone call (APP) from said terminal (Tij) to a conference bridge (PC) that is able to connect said terminal (Tij) to said conference call on reception of the telephone call (APP) from said terminal (Tij), the microcircuit card (43) storing an executable that is able to transmit commands to the terminal in which it is inserted.

9. Computer program (PSA) including instructions for executing the steps of the scheduling method according to Claim 8 when said program is executed by a computer.

10. Computer-readable recording medium (13) on which a computer program (PSA) comprising instructions for executing the steps of the scheduling method according to Claim 8 is recorded.
